# EUROPEAN PATENT APPLICATION

(11) **EP 2 667 678 A2**
(43) Date of publication of application: **27.11.2013**
(21) Application number: 13275123.1
(22) Date of filing: 21.05.2013
(51) Int. Cl.: H04W 76/02

(54) **Co-existence support for 3GPP device and fixed device bearer transport over fixed broadband access network**

(30) Priority: 21.05.2012 US 201261649913 P
(71) Applicant: ZTE Corporation, Nanshan District Shenzhen 518057 (CN); ZTE (USA) Inc., Morristown, NJ 07960 (US)
(72) Inventor: So,, Tricci, San Diego, CA 92130 (US); You,, Jianjie, 210012 Nanjing (CN); Zhu,, Chunhui, 210012 Nanjing (CN)
(74) Representative: Potter Clarkson LLP

(57) **Abstract**

Methods, systems, and devices are disclosed for implementing a network solution to support the co-existence of a 3GPP mobile device and a fixed device attachment to a fixed broadband access network via a wireless interface while still allowing the same type of evolved packet core access and Non-Seamless WLAN Offload for the 3GPP mobile device.

## Description

### CROSS-REFERENCE TO RELATED APPLICATIONS

This patent document claims the benefit of priority of U.S. Provisional Patent Application No. 61/649,913, filed on May 21, 2012. The entire content of the before-mentioned patent application is incorporated by reference as part of the disclosure of this application.

### BACKGROUND

This patent document relates to fixed mobile convergence communications systems.

Recently, there has been some interest in enabling mobile communications devices such as smartphones, tablets and other user equipment, that have wide area network communications capability (e.g., 3G and 4G) to operate using a fixed broadband access network in some instances. For example, a cellular phone may be able to access the Internet using access through a Wi-Fi connection to a residential broadband access network such as cable modem or asymmetric digital subscriber loop (ADSL).

Techniques for improved co-existence of wireless mobile devices and fixed broadband access equipment are desirable.

### SUMMARY

This patent document describes technologies, among other things, for facilitating connectivity of a user equipment over a fixed access network using services and policies from a wireless network.

Methods, systems and apparatus for facilitating connectivity over a fixed network of a wireless device operable in a wireless network are disclosed. In one aspect, a method includes receiving an access request at a server and providing Internet Protocol (IP) connectivity to the user equipment based on a type of the access request. In some implementations of the method, for example, the type of the access request is one of a first type in which there is no outer IP based tunnel to encapsulate an inner packet from the user equipment or a second type in which the inner packet is encapsulated using an outer IP tunneling. For example, when the access request is of the first type, then the method can further include coordinating a session binding between the fixed network and the wireless network. For example, when the access request is of the second type, then the method can further include relaying the received access request to a gateway operating in the fixed network.

In another aspect, an apparatus for facilitating connectivity over a fixed network of a wireless device operable in a wireless network includes a receiver that receives an access request, and an Internet Protocol (IP) connectivity provider that provides IP connectivity to the user equipment based on a type of the access request. In some implementations of the apparatus, for example, the type of the access request is one of a first type in which there is no outer IP based tunnel to encapsulate an inner packet from the user equipment or a second type in which the inner packet is encapsulated using an outer IP tunneling. For example, when the access request is of the first type, the apparatus can further include a coordinator that coordinates a session binding between the fixed network and the wireless network. For example, when the access request is of the second type, the apparatus can further include a relay that relays the received access request to a gateway operating in the fixed network.

In another aspect, a computer program product includes a non-transitory, computer-readable medium having instructions stored thereon, in which the instructions, when executed by a processor, causes the processor to implement a method for facilitating connectivity over a fixed network of a user equipment operable in a wireless network. The instructions include code for receiving an access request at a server, and code for providing Internet Protocol (IP) connectivity to the user equipment based on a type of the access request. In some implementations of the computer program product, for example, the type of the access request is one of a first type in which there is no outer IP based tunnel to encapsulate an inner packet from the user equipment or a second type in which the inner packet is encapsulated using an outer IP tunneling. For example, when the access request is of the first type, the instructions can further include code for coordinating a session binding between the fixed network and the wireless network. For example, when the access request is of the second type, the instructions can further include code for relaying the received access request to a gateway operating in the fixed network.

In another aspect, a method implementable at a broadband network gateway operable in an access network includes receiving an attachment request from a user equipment, determining, based on the received attachment request, whether the attachment request is for a wireless network routed transport, and forwarding the attachment request, when it is determined that the attachment request is for the wireless network routed transport, to a trusted wireless access gateway.

In another aspect, an apparatus operable at a broadband network gateway in an access network includes a receiver unit to receive an attachment request from a user equipment, a processing unit, electronically coupled to the receiver, to determine, based on the attachment request received by the receiver unit, whether the attachment request is for a wireless network routed transport, and a transmitting unit, electronically coupled to the processing unit, to forward the attachment request, when it is determined by the processing unit that the attachment request is for the wireless network routed transport, to a trusted wireless access gateway.

In another aspect, a computer program product includes a non-transitory, computer-readable medium having instructions stored thereon, in which the instructions, when executed by a processor, causes the processor to implement a method implementable at a broadband network gateway operable in an access network. The instructions include code for receiving an attachment request from a user equipment, code for determining, based on the received attachment request, whether the attachment request is for a wireless network routed transport, and code for forwarding the attachment request, when it is determined that the attachment request is for the wireless network routed transport, to a trusted wireless access gateway.

In another aspect, a communications system comprising a trusted wireless access gateway, a broadband network gateway and a user equipment is disclosed. The user equipment is configured to transmit an attachment request. The broadband network gateway is configured to receive the attachment request from the user equipment and determine whether the attachment request is an extensible authentication protocol (EAP) authentication request and forward to the trusted wireless gateway the attachment request when is determined that the attachment request is an EAP authentication request. The trusted wireless access gateway is configured to fulfill the attachment request based on a type of the attachment request.

These and other aspects, and their implementations and variations are set forth in the drawings, the description and the claims.

### BRIEF DESCRIPTION OF THE DRAWINGS

FIG. 1 depicts an example of wireless network architecture.

FIG. 2 shows a block diagram of a radio device operable in a wireless network.

FIG. 3 shows an exemplary diagram depicting a user protocol stack of a 3GPP S2a transport over the fixed broadband access network.

FIG. 4 shows an exemplary diagram depicting a user protocol stack of a 3GPP S2b transport over the fixed broadband access network.

FIG. 5 shows an exemplary diagram depicting a user protocol stack of a 3GPP trusted S2c transport over the fixed broadband access network.

FIG. 6 shows an exemplary diagram depicting a user protocol stack of a 3GPP untrusted S2c transport over the fixed broadband access network.

FIG. 7 depicts an exemplary network architecture for EPC-Routed vs. Non-seamless WLAN Offload.

FIG. 8 illustrates an architecture overview of an exemplary S2a centric EPC-routed network solution.

FIG. 9 illustrates a 3GPP UE S2a EPC-routed scenario for dual-stack IPv6/IPv4 bearer transport establishment over Fixed Broadband Access Network via WLAN interface.

FIG. 10 illustrates a 3GPP UE S2a EPC-routed scenario for IPv4 bearer transport establishment over Fixed Broadband Access Network via WLAN interface.

FIG. 11 illustrates a 3GPP UE NSWO scenario for bearer transport establishment over Fixed Broadband Access Network via WLAN interface.

FIG. 12 illustrates a fixed device scenario for bearer transport establishment over Fixed Broadband Access Network.

FIG. 13 shows a flow chart representation of a process of facilitating connectivity over a fixed network.

FIG. 14 shows a block diagram representation of an apparatus for facilitating connectivity over a fixed network.

Like reference symbols in the various drawings indicate like elements.

### DETAILED DESCRIPTION

The methods, systems, apparatus described in this patent document are useful, in one aspect, in providing network connectivity to cellular user equipment operating using a fixed broadband network access. In another aspect, the disclosed techniques may be used to enable co-existence of fixed devices (e.g., a home computer communicatively coupled to a home access point such as a cable modem) and wireless devices, e.g., such as third generation partnership project (3GPP) devices. In some disclosed embodiments, the co-existence may be facilitated by providing a broadband gateway the ability to be able to distinguish between a fixed device and a 3GPP device, based on a received connectivity request from the fixed device.

In some embodiments, some of the disclosed techniques may be implemented on a hardware platform called a trusted wireless access gateway (TWAG) that is operable in the access network. As further described below, the TWAG may facilitate the attachment of the 3GPP device to the fixed broadband access network and further support enforcing the 3GPP service provider's policies while providing connectivity to the 3GPP device.

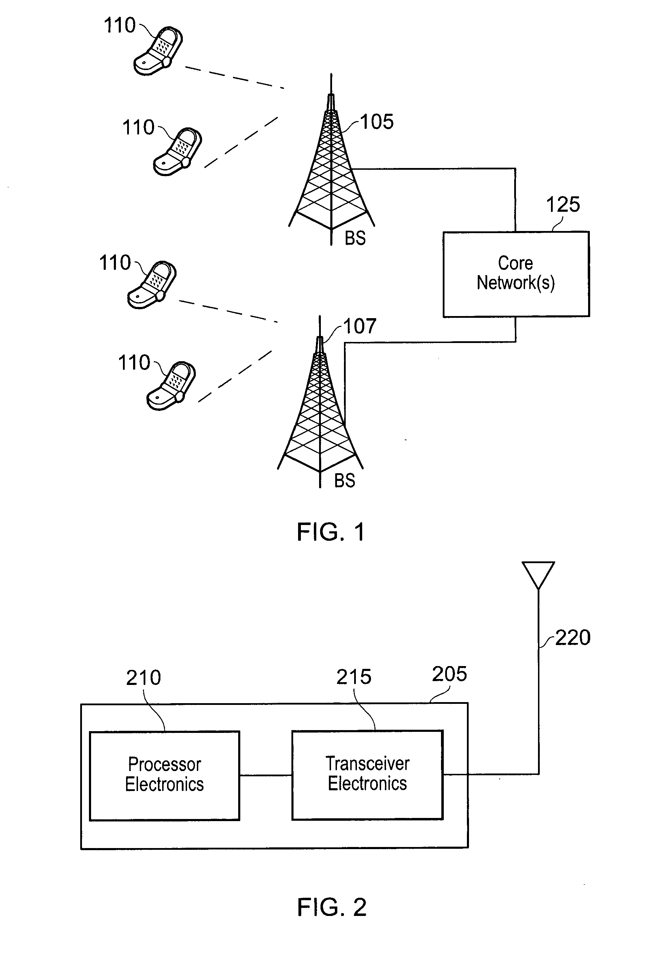

FIG. 1 shows an example of a wireless communication network or system. This wireless communication network can include one or more base stations (BSs) 105, 107 and one or more wireless devices 110. A base station 105, 107 can transmit a signal on a forward link (FL), e.g., known as a downlink (DL) signal, to the one or more wireless devices 110. A wireless device 110 can transmit a signal on a reverse link (RL), e.g., known as an uplink (UL) signal, to the one or more base stations 105, 107. A wireless communication system can include one or more core networks 125 to control one or more base stations 105, 107. One or more base stations form a radio access network. For example, a base station, due to its nature of providing radio access for a wireless device, either alone or in combination with one or more other base stations, can be referred to as an access point (AP), an access network (AN) or eNodeB. Examples of wireless communication systems that can implement the present techniques and systems include, among others, wireless communication systems based on Code Division Multiple Access (CDMA), e.g., such as CDMA2000 1x, High Rate Packet Data (HRPD), Long-Term Evolution (LTE), Universal Terrestrial Radio Access Network (UTRAN), and Worldwide Interoperability for Microwave Access (WiMAX).

FIG. 2 shows an example of a radio transceiver station for implementing a wireless device, a base station or other wireless communication modules. Various examples of radio stations include the one or more base stations 105, 107 and the wireless devices 110 in FIG. 1. A radio station 205, e.g., such as a base station or a wireless device, can include processor electronics 210 such as a microprocessor that implements methods such as one or more of the techniques presented in this patent document. The radio station 205 can include transceiver electronics 215 to send and/or receive wireless signals over one or more communication interfaces such as one or more antennas 220. The radio station 205 can include other communication interfaces for transmitting and receiving data. For example, in some implementations, the radio station 205 can include one or more wired communication interfaces to communicate with a wired network. The radio station 205 can include one or more memories configured to store information such as data and/or instructions. In some implementations, the processor electronics 210 can include at least a portion of transceiver electronics 215 and a memory.

In some implementations, radio stations 205 can communicate with each other based on a CDMA air interface. In some implementations, radio stations 205 can communicate with each other based on an orthogonal frequency-division multiplexing (OFDM) air interface which can include Orthogonal Frequency-Division Multiple Access (OFDMA) air interface. In some implementations, radio stations 205 can communicate using one or more wireless technologies such as CDMA such as CDMA2000 1x, HRPD, WiMAX, LTE, and Universal Mobile Telecommunications System (UMTS).

In some implementations, the radio station 205 may additionally be configured with a local area network connectivity, e.g., such as a 802.11 (a/b/g/n) interface. The availability of such an interface may make it possible to communicatively couple the radio station 205 to the Internet via the local area connection. For example, a user may access services over his/her user equipment (UE) by connecting to the service via a wireless local area network connection (e.g., home Wi-Fi access) through a fixed broadband network such as a cable modem network or a DSL network.

One usefulness of the Fixed Mobile Interworking or Convergence is to allow the mobile operator to enable its mobile devices (e.g., UEs) to access the 3GPP Evolved Packet Core (EPC), e.g., via EPC-routed), and to offload the mobile device traffic, e.g., via Non-Seamless WLAN Offload (NSWO). This routing may be through the EPC but routed locally, e.g., via the WLAN access over the fixed broadband access network.

While the mobile devices are leveraging the fixed broadband access network via WLAN airlink interface rather than the cellular airlink interface for EPC-routed and NSWO traffic, the fixed operator still needs to maintain the ongoing support for its fixed devices over the fixed broadband access network. However, the access policy for the mobile device traffic is coming from the mobile operator, which is different for the fixed devices of which the access policy is coming from the fixed operator.

As a result, there is a need to differentiate a fixed device's attachment to the fixed broadband network from a mobile device's attachment, so that the correct access policy information can be retrieved to establish the bearer transport for the mobile and the fixed devices accordingly.

The techniques disclosed in this patent document, in one aspect, provide a network solution to support the co-existence of the 3GPP mobile device and the fixed device attachment to the Fixed Broadband Access network via WLAN interface while still allowing the same type of EPC access and NSWO for the 3GPP mobile device.

There are three 3GPP EPC-routed access types, e.g., sometimes referred to as S2a, S2b, S2c. Among two of these three 3GPP access types, e.g., 3GPP EPC-routed packet for S2b and S2c access, the inner packet is encapsulated within an IP-based tunneling (e.g., IPSec, GRE, IP-in-IP, etc.) to be transported over the fixed broadband access network; whereas, in the case of the 3GPP S2a access type, there is no outer IP-based tunnel to encapsulate the UE's inner packet that is transported over the fixed broadband access network because the fixed broadband access network is considered as the "trusted" access for the 3GPP operator. The GPRS Tunneling Protocol (GTP) for S2a access type is expected to be terminated at the edge of the fixed broadband access network which requires a special functional entity, Trusted WLAN Access Gateway (TWAG), to be introduced to the fixed broadband access network to support the 3GPP S2a access policy retrieval and IP bearer session binding with 3GPP EPC.

Nevertheless, for all of these three access types, the 3GPP UE's source IP address of the IP packet (e.g., with or without IP-based encapsulation), which is transported over the fixed broadband access network, is assigned by the 3GPP EPC.

Another type of 3GPP UE traffic would also be transported over the fixed broadband access network via WLAN interface is the NSWO-offloaded traffic. Although the access policy of the mobile device for NSWO is acquired from the 3GPP network, the source IP address of the 3GPP UE for the NSWO, in this case, is assigned by the fixed broadband access network so that the 3GPP UE traffic can be routed locally to communicate directly with the external network.

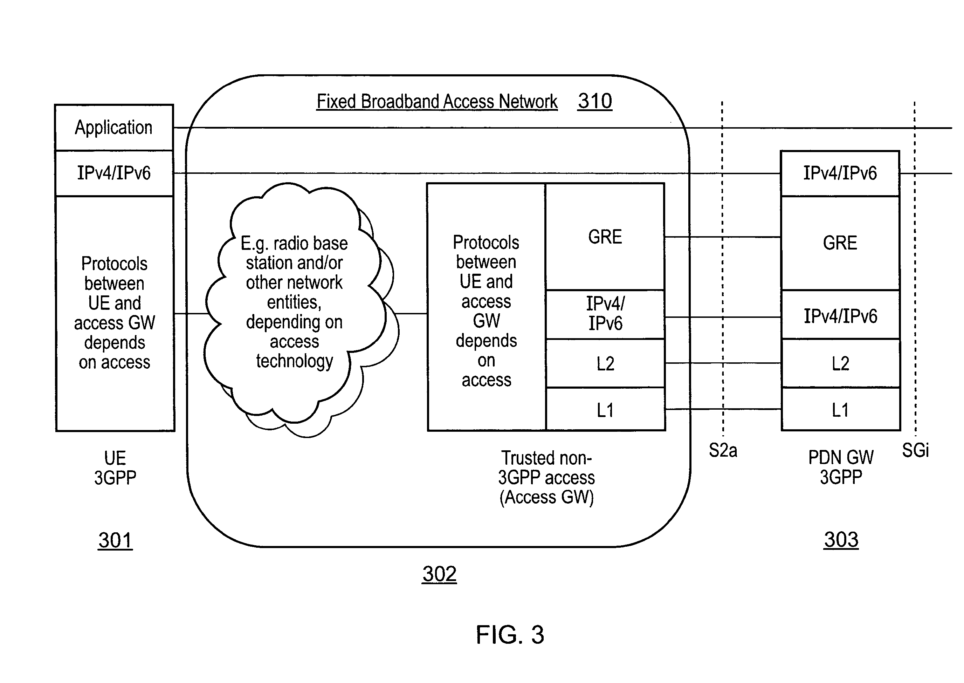

FIGS. 3, 4, 5 and 6 illustrate the differences of the user plane protocol stack for the S2a, S2b and S2c transport over the fixed broadband access network for 3GPP EPC-routed traffic.

FIG. 3 shows an exemplary diagram depicting a user protocol stack of a 3GPP S2a transport over a fixed broadband access network 310. The diagram of FIG. 3 shows a protocol stack of a 3GPP UE 301, a protocol stack of a packet data network gateway (PDN GW) 303, and a trusted non-3GPP access (Access GW) 302.

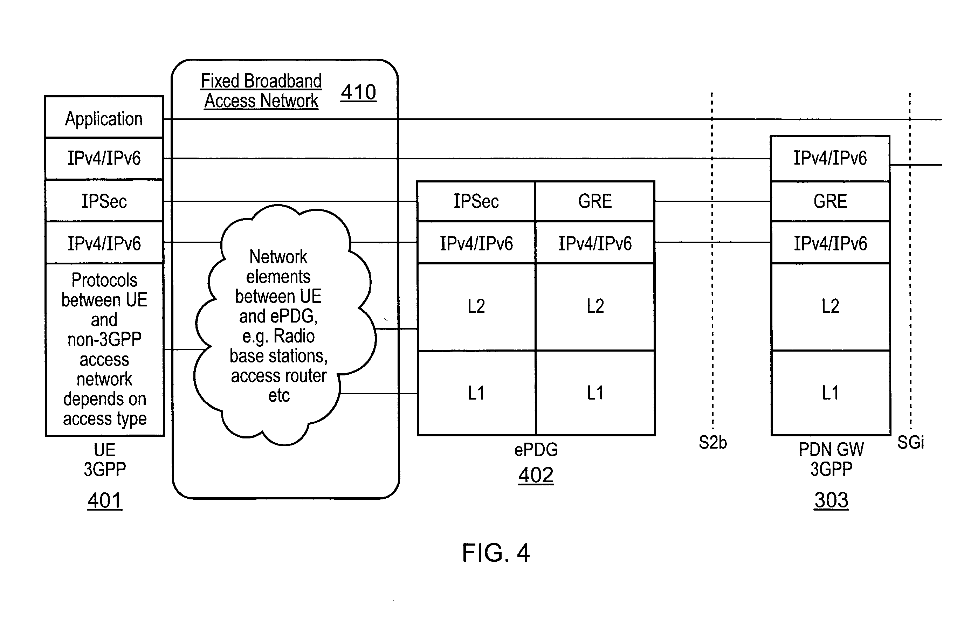

FIG. 4 shows an exemplary diagram depicting a user protocol stack of the 3GPP S2b transport over a fixed broadband access network 410. The diagram of FIG. 4 shows a protocol stack of a 3GPP UE 401, the protocol stack of the packet data network gateway (PDN GW) 303, and an evolved packet data gateway (ePDG) 402.

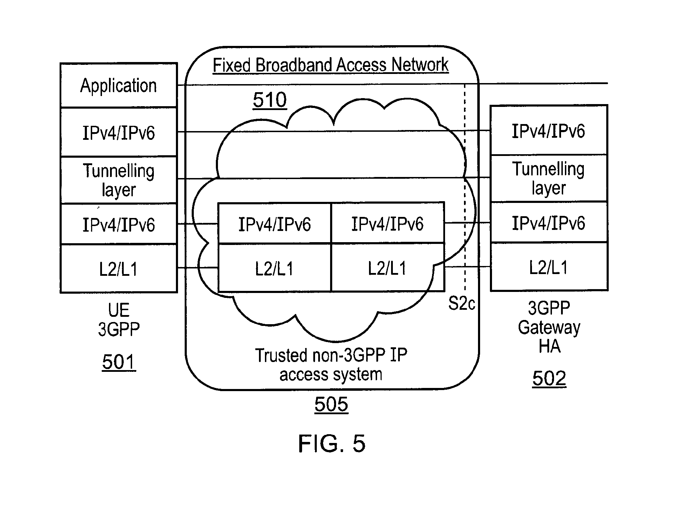

FIG. 5 shows an exemplary diagram depicting a user protocol stack of a 3GPP trusted S2c transport over a fixed broadband access network 510. The diagram of FIG. 5 shows a protocol stack of a 3GPP UE 501, a protocol stack of a 3GPP gateway home agent HA 502, and a trusted non-3GPP access system 505.

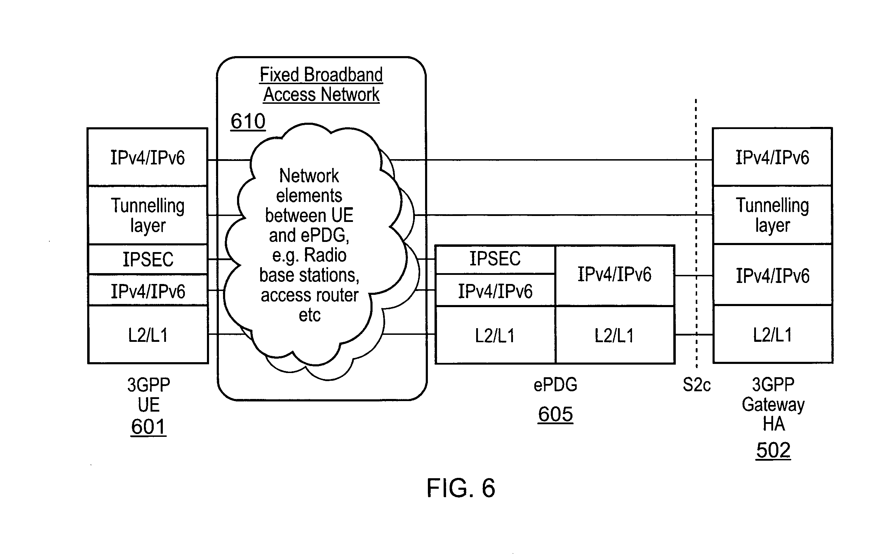

FIG. 6 shows an exemplary diagram depicting a user protocol stack of a 3GPP untrusted S2c transport over the fixed broadband access network 610. The diagram of FIG. 6 shows a protocol stack of a 3GPP UE 601, the protocol stack of the 3GPP gateway HA 502, and an evolved packet data gateway (ePDG) 605.

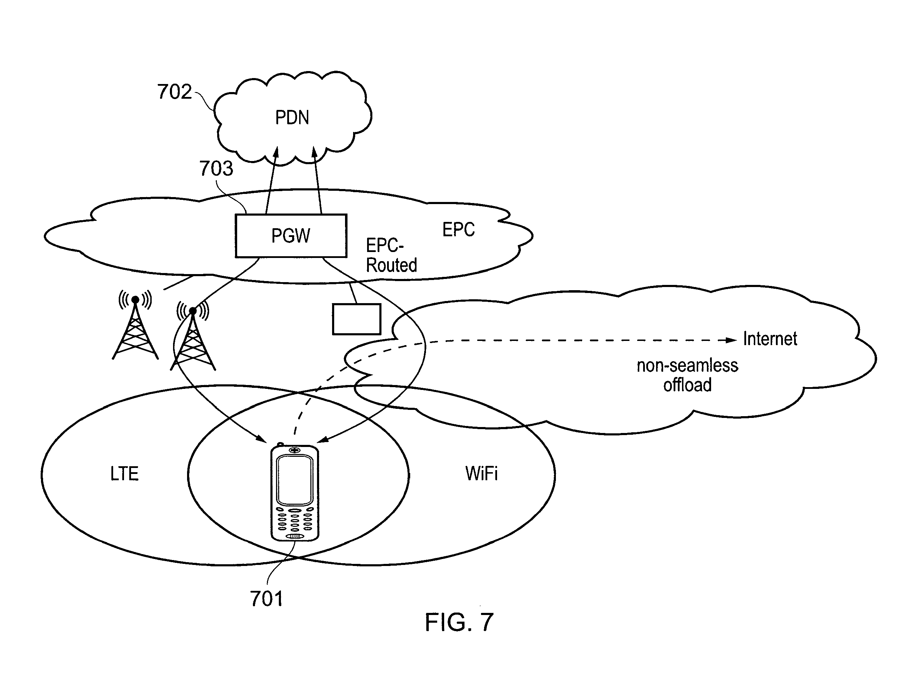

FIG. 7 shows a network architecture diagram depicting differences between the EPC-routed traffic and the NSWO traffic originated by an exemplary 3GPP UE. The network architecture diagram of FIG. 7 shows a 3GPP UE 701, e.g., depicted as a smartphone or tablet device, capable of being operated in a mobile communication network and a fixed broadband access network, e.g., depicted as an LTE network and a WiFi network. The network architecture diagram shows a packet data network (PDN) 702 and a packet data network gateway (PGW) 703 in wireless communication with the 3GPP UE 701. The network architecture diagram shows the exemplary wireless communication traffic including EPC-routed and NSWO traffic.

An issue arises for supporting the co-existence of a 3GPP UE's EPC-routed and NSWO traffic while continuing the support for the fixed devices in the fixed broadband access network. The 3GPP UE's source IP address of the fixed device and the 3GPP NSWO traffic are assigned by the fixed broadband access network, however, the access policy for the fixed and 3GPP UE are coming from the fixed and 3GPP operators, respectively. It is noted, for example, that there may or may not be an IP address assigned to the fixed device by the fixed broadband access network, dependent on the type of fixed device is operating at layer-2 or IP layer. Table 1 summarizes an example of a network's responsibility for the access policy and source IPaddressing assignment for a fixed and 3GPP UE. Table 2 explains an example of how a 3GPP UE is routing through a Fixed Broadband Access Network based on the type of IP address assignment obtained from fixed or 3GPP operator.

**Table 1**

| Summary of Network Responsibility for Policy Control and IP Address Assignment | | |
|---|---|---|
| | Access Policy Source | 3GPP UE's Source IP Address Assignment Source |
| 3GPP Device (EPC-Routed - S2a/b/c) | 3GPP-EPC | 3GPP-EPC |
| 3GPP Device (NSWO) | 3GPP-EPC | Fixed Broadband Access |
| Fixed Device | Fixed Broadband Access | Fixed Broadband Access |

**Table 2**

| IP Addressing Assignment Requirement for 3GPP UE Routing Through Fixed Broadband Access Network | | |
|---|---|---|
| | Routing through Fixed Broadband Access Network | Routing through EPC |
| 3GPP Device (EPC-Routed - S2b/c) | UE's tunnel IP address is assigned by Fixed Broadband Access Network | UE's source IP address is assigned by 3GPP-EPC |
| 3GPP Device (EPC-Routed - S2a) | "No" UE's tunnel IP over Fixed Broadband Access Network - leverages only 3GPP-EPC assigned UE's source IP address to route through Fixed Broadband Access Network | UE's source IP address is assigned by 3GPP-EPC |
| 3GPP Device (NSWO) | "Only ONE" local IP address assigned by Fixed Broadband Network to communicate directly to external network without going through EPC | N/A |

In some aspects, to support the co-existence of the 3GPP UE and the fixed device over the fixed broadband access network with the appropriate access policy that may require the IP bearer session binding and IP address assignment (e.g., applicable only to S2b/S2c S2a EPC-routed traffic) from the EPC, a new functional element, Trusted Wireless Access Gateway (TWAG), is introduced at the boundary of the fixed broadband access network and the EPC network to support these two main functions during the 3GPP UE attachment to the fixed broadband access network via WLAN.

In some implementations, for example, to direct the 3GPP UE's attachment request to the TWAG, the existing Broadband Network Gateway (BNG) at the Fixed Broadband Access Network could be enhanced to support the AAA-proxy (e.g., RADIUS-proxy) so that it can differentiate the 3GPP UE's extensible authentication protocol (EAP) authentication request (part of the UE's attachment procedure) from that of the fixed device.

For example, if the BNG recognizes that the incoming attachment request is an EAP authentication request coming from a 3GPP UE by referring to the realm of the UE's Network Access Identifier (NAI), and if the SSID is not for NSWO, the request may be forwarded to TWAG to process. Otherwise, for example, if the incoming attachment request is not a RADIUS/EAP authentication request or if the EAP authentication request is not coming from 3GPP UE (e.g., by referring to the realm of the UE's NAI) or if the service set identification (SSID) is for NSWO, the request may be forwarded directly to the Fixed-AAA proxy/server to process.

The TWAG supports also the AAA-proxy (e.g., RADIUS-proxy) function and may be responsible for intercepting RADIUS/EAP authentication response which contains the 3GPP UE's access type policy (e.g., S2a/b/c EPC-routed vs. NSWO), UE's international mobile subscriber identity (IMSI), associated access point name (APN) and the EPC-assigned IP address in the case for the S2a EPC routed traffic (e.g., applicable only to the S2a EPC routed traffic), for the S2b/c EPC routed traffic.

According to the 3GPP's UE access type policy, UE's IMSI, associated APN and IP address, if any (e.g., for S2a scenario), that are obtained from the 3GPP EPC, the TWAG will then coordinate with the BNG to establish the IP bearer session binding for the bearer transport over the fixed broadband access network and EPC network (if EPC-routed) for the 3GPP UE.

In some aspects, to support the co-existence of the 3GPP UE and the fixed device over the fixed broadband access network with the appropriate access policy that may require the IP bearer session binding and IP address assignment from the EPC, a new functional element, Trusted Wireless Access Gateway (TWAG) is introduced at the boundary of the fixed broadband access network and the EPC network to support 3GPP UE access policy retrieval, and if applicable, the IP address assignment and IP bearer session binding with EPC (applicable only to S2a EPC-routed traffic) during the 3GPP UE attachment to the fixed broadband access network via WLAN.

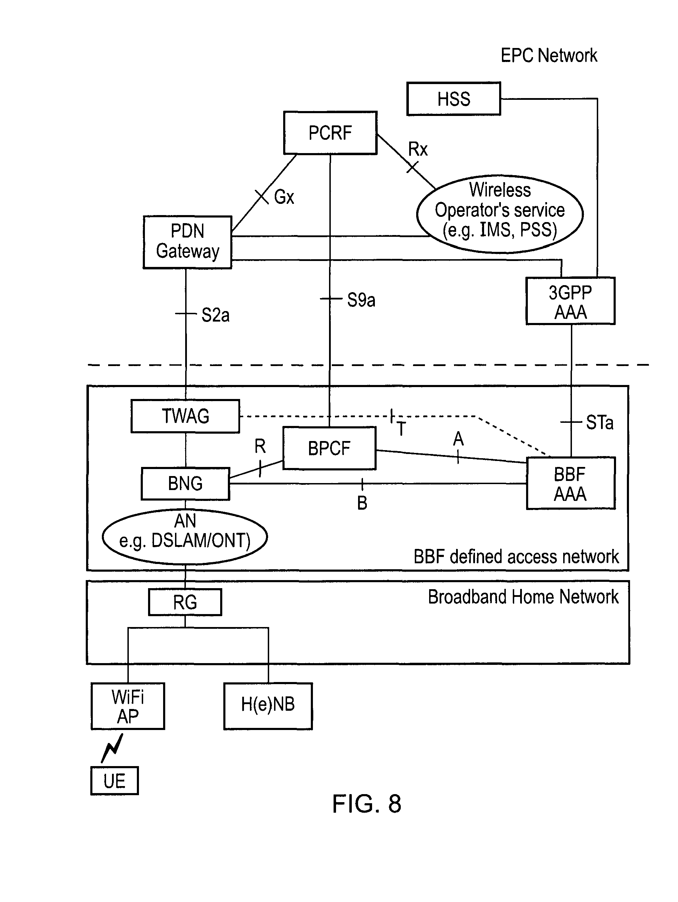

FIG. 8 shows a diagram depicting an overview of a fixed broadband access network that supports the exemplary S2a EPC-routed network solution. As shown in the diagram of FIG. 8, a TWAG is configured in a broadband forum (BBF) defined access network and communicatively coupled between a PDN gateway of the EPC Network and a BNG of the BBF defined access network, and communicatively coupled to a BBF AAA.

In another aspect, to direct the 3GPP UE's EPC-routed attachment request to TWAG, the existing Broadband Network Gateway (BNG) at the Fixed Broadband Access Network can be enhanced to support the AAA-proxy (e.g. RADIUS-proxy) to differentiate the 3GPP UE's EAP authentication request (part of the UE's attachment request) from the fixed device.

For example, if the access type is EPC-routed S2a obtained from the authentication response, the TWAG will then coordinate with the BNG to perform the IP bearer session binding between the fixed broadband access network and EPC network for the 3GPP UE's bearer transport based on the information of the UE's IMSI, APN and EPC assigned IP address. TWAG also becomes the DHCP proxy server to support the 3GPP UE's DHCP DISCOVERY to acquire the IP address. The TWAG will then coordinate with the BNG to redirect the 3GPP UE's DHCP DISCOVERY towards itself.

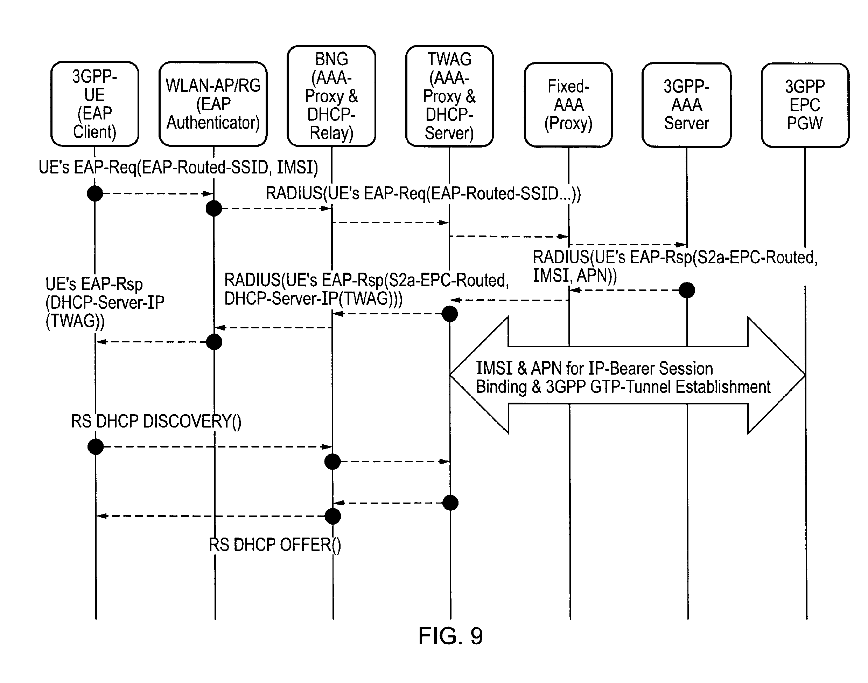

FIG. 9 illustrates a 3GPP UE S2a EPC-routed scenario for dual-stack IPv6/IPv4 bearer transport establishment over Fixed Broadband Access Network via WLAN interface.

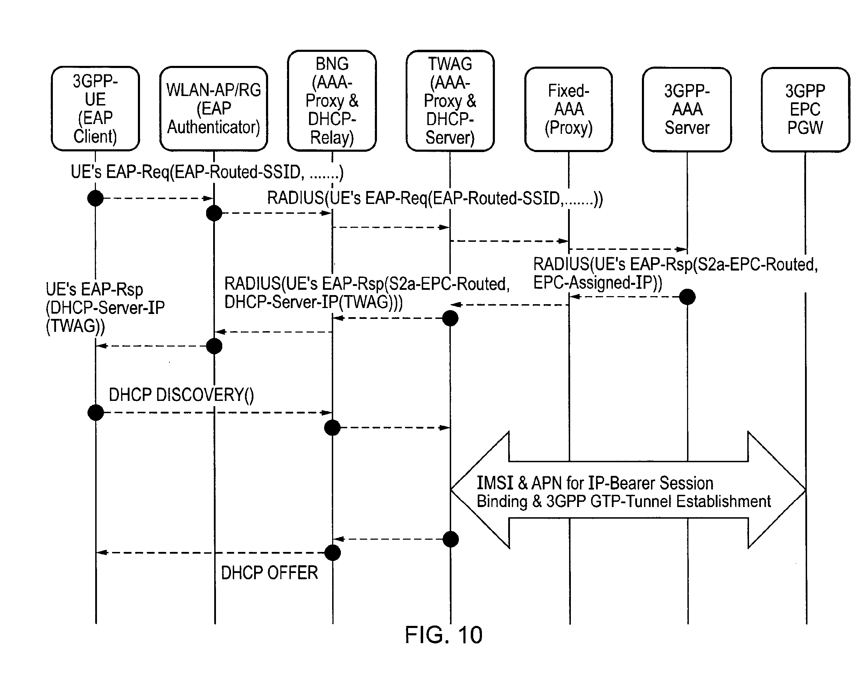

FIG. 10 illustrates a 3GPP UE S2a EPC-routed scenario for IPv4 bearer transport establishment over Fixed Broadband Access Network via WLAN interface.

For example, if the access type is EPC-routed S2b/c obtained from the authentication response, the TWAG will relay the authentication response to the BNG. The BNG will also relay the RADIUS authentication response to the RG. No additional processing is required on top of the existing Release-11 3GPP specifications (e.g., 3GPP TS 23.203, TS 23.402 and TS 23.139).

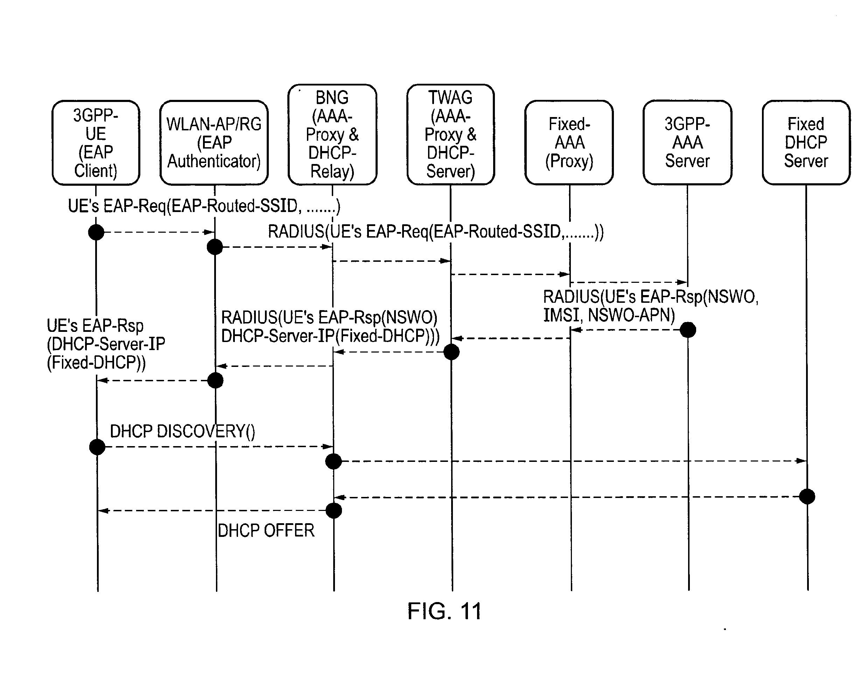

FIG. 11 illustrates a 3GPP UE NSWO scenario for bearer transport establishment over a fixed broadband access network via WLAN interface.

With reference to FIG. 11, if the 3GPP UE has requested the NSWO via the SSID and if the EPC grants such request to the 3GPP UE in the RADIUS/EAP response via Fixed-AAA to the BNG, the same NSWO procedures as specified in the existing Release-11 3GPP specifications (e.g., TS 23.203, TS 23.402 and TS 23.139) are employed.

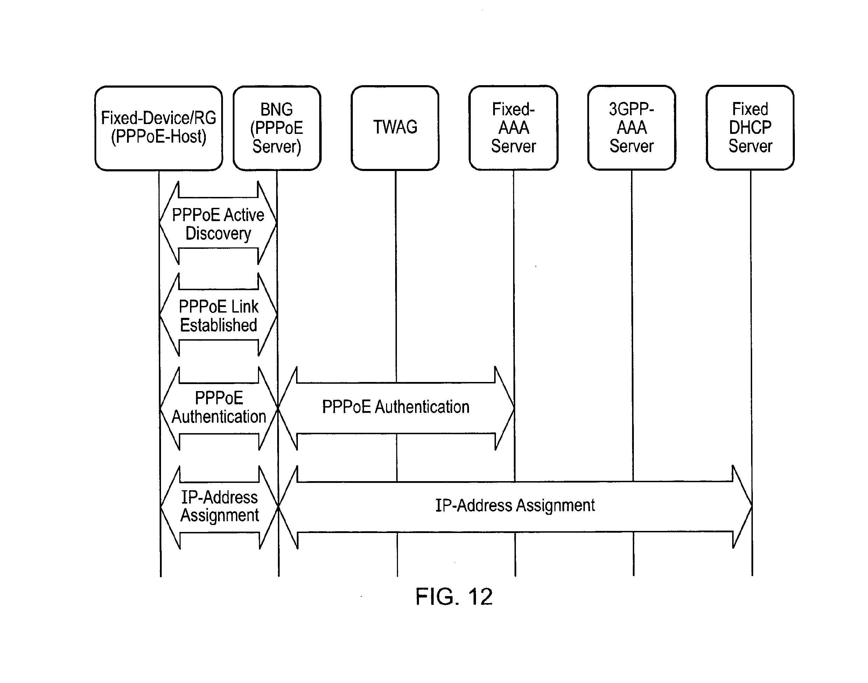

FIG. 12 illustrates a fixed device scenario for bearer transport establishment over a fixed broadband access network.

With reference to FIG. 12, in the case of the fixed device that BNG recognizes such request based on either the authentication method (e.g., PPPoE) or the realm of the fixed device's NAI info from the RADIUS/EAP request, the BNG will execute its existing function to direct the request towards the fixed AAA for authentication and also towards the fixed DHCP server for IP address assignment.

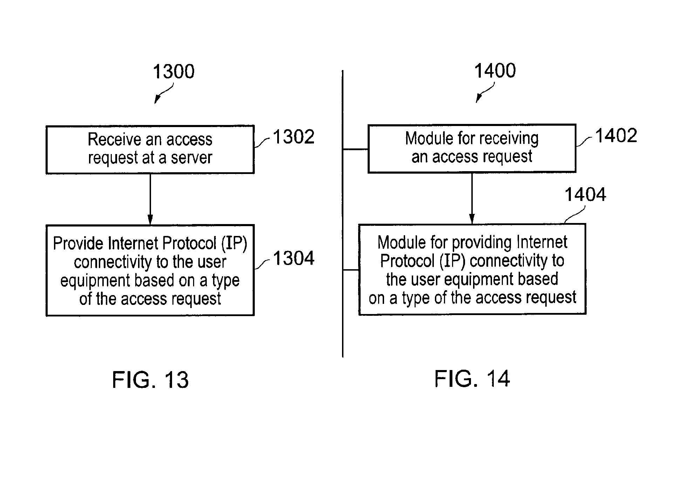

FIG. 13 shows a flow chart representation of a process 1300 for facilitating connectivity over a fixed network of a user equipment operable in a wireless network. At 1302, an access request is received at a server. At 1304, Internet Protocol (IP) connectivity is provided to the user equipment based on a type of the access request. As previously discussed, in some implementations, the type of the access request is one of a first type in which there is no outer IP based tunnel to encapsulate an inner packet from the user equipment and a second type in which the inner packet is encapsulated using an outer IP tunneling. As previously discussed, in some implementations, when the access request is of the first type, then coordinating a session binding between the fixed network and the wireless network. In some implementations, when the access request is of the second type, then relaying the received access request to a gateway operating in the fixed network.

FIG. 14 is a block diagram representation of an apparatus 1400 for facilitating connectivity over a fixed network of a wireless device operable in a wireless network. The module 1402 (e.g., a receiver) is for receiving an access request. The module 1404 (e.g., an IP connectivity provider) is for providing IP connectivity to the user equipment based on a type of the access request. The apparatus 1400 and modules 1402, 1404 may be further configured to perform some of the techniques disclosed in this patent document.

It will be appreciated that various techniques are disclosed for facilitating co-existence of fixed devices (e.g., devices that are communicatively coupled exclusively to the fixed broadband network) and 3GPP wireless devices in a fixed mobile network.

It will further be appreciated that a trusted wireless access gateway may be introduced to the fixed mobile network at the boundary between fixed broadband network and the packet core network to facilitate policy enforcement and packet routing through the fixed broadband network.

The disclosed and other embodiments and the functional operations described in this patent document can be implemented in digital electronic circuitry, or in computer software, firmware, or hardware, including the structures disclosed in this patent document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a stand alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this patent document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of an invention that is claimed or of what may be claimed, but rather as descriptions of features specific to particular embodiments. Certain features that are described in this patent document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A method for facilitating connectivity over a fixed network of a user equipment operable in a wireless network, comprising:
receiving an access request at a server; and
providing Internet Protocol (IP) connectivity to the user equipment based on a type of the access request,
wherein the type of the access request is one of a first type in which there is no outer IP based tunnel to encapsulate an inner packet from the user equipment or a second type in which the inner packet is encapsulated using an outer IP tunneling.

2. The method of claim 1, when the access request is of the first type, then further comprising coordinating a session binding between the fixed network and the wireless network.

3. The method of claim 1, when the access request is of the second type, then further comprising relaying the received access request to a gateway operating in the fixed network.

4. An apparatus for facilitating connectivity over a fixed network of a wireless device operable in a wireless network, comprising:
a receiver that receives an access request; and
an Internet Protocol (IP) connectivity provider that provides IP connectivity to the user equipment based on a type of the access request,
wherein the type of the access request is one of a first type in which there is no outer IP based tunnel to encapsulate an inner packet from the user equipment or a second type in which the inner packet is encapsulated using an outer IP tunneling.

5. The apparatus of claim 4, further comprising:
a coordinator that coordinates, when the access request is of the first type, a session binding between the fixed network and the wireless network.

6. The apparatus of claim 4, further comprising:
a relay that relays, when the access request is of the second type, the received access request to a gateway operating in the fixed network.

7. A computer program product comprising a non-transitory, computer-readable medium having instructions stored thereon, the instructions, when executed by a processor, causing the processor to implement a method for facilitating connectivity over a fixed network of a user equipment operable in a wireless network, the instructions comprising:
code for receiving an access request at a server; and
code for providing Internet Protocol (IP) connectivity to the user equipment based on a type of the access request,
wherein the type of the access request is one of a first type in which there is no outer IP based tunnel to encapsulate an inner packet from the user equipment or a second type in which the inner packet is encapsulated using an outer IP tunneling.

8. The non-transitory, computer-readable medium of claim 7, when the access request is of the first type, further comprising code for coordinating a session binding between the fixed network and the wireless network.

9. The non-transitory, computer-readable medium of claim 7, when the access request is of the second type, further comprising code for relaying the received access request to a gateway operating in the fixed network.

10. A method implementable at a broadband network gateway (BNG) operable in an access network, the method comprising:
receiving an attachment request from a user equipment;
determining, based on the received attachment request, whether the attachment request is for a wireless network routed transport; and
forwarding the attachment request, when it is determined that the attachment request is for the wireless network routed transport, to a trusted wireless access gateway (TWAG).

11. An apparatus operable at a broadband network gateway (BNG) in an access network, the apparatus comprising:
a receiver unit to receive an attachment request from a user equipment;
a processing unit, electronically coupled to the receiver, to determine, based on the attachment request received by the receiver unit, whether the attachment request is for a wireless network routed transport; and
a transmitting unit, electronically coupled to the processing unit, to forward the attachment request, when it is determined by the processing unit that the attachment request is for the wireless network routed transport, to a trusted wireless access gateway (TWAG).

12. A computer program product comprising a non-transitory, computer-readable medium having instructions stored thereon, the instructions, when executed by a processor, causing the processor to implement a method implementable at a broadband network gateway (BNG) operable in an access network, the instructions comprising:
code for receiving an attachment request from a user equipment;
code for determining, based on the received attachment request, whether the attachment request is for a wireless network routed transport; and
code for forwarding the attachment request, when it is determined that the attachment request is for the wireless network routed transport, to a trusted wireless access gateway (TWAG).

13. A communications system, comprising:
a trusted wireless access gateway;
a broadband network gateway; and
a user equipment,
wherein:
the user equipment is configured to transmit an attachment request,
the broadband network gateway is configured to receive the attachment request from the user equipment and determine whether the attachment request is an extensible authentication protocol (EAP) authentication request and forward to the trusted wireless gateway the attachment request when is determined that the attachment request is an EAP authentication request, and
the trusted wireless access gateway is configured to fulfill the attachment request based on a type of the attachment request.
